# FASCICULE DE BREVET EUROPEEN

(11) **EP 2 552 855 B1**
(45) Date de publication et mention de la délivrance du brevet: **07.03.2018**
(21) Numéro de dépôt: 11714914.6
(22) Date de dépôt: 01.04.2011
(51) Int. Cl.: C04B 35/111

(54) **CÉRAMIQUE OPAQUE À BASE D'ALUMINE**
Undurchsichtige Keramik auf Alumina Basis
Alumina based opaque ceramic

(30) Priorité: 01.04.2010 EP 10405073
(43) Date de publication de la demande: 06.02.2013
(73) Titulaire: Rolex S.A., 1211 Genève 26 (CH)
(72) Inventeur: PUJOL, Ollivier, 1006 Lausanne (CH); RIGOT Isabelle, 74330 La Balme de Sillingy (FR)
(74) Mandataire: Moinas & Savoye SARL
(86) Numéro de dépôt international: PCT/CH2011/000068
(87) Numéro de publication internationale: WO 2011/120181

(56) Documents cités:
- JP-A- 4 193 760
- JP-A- 7 187 760
- JP-A- 56 140 070
- JP-A- 56 140 071
- JP-A- 2000 279 833

## Description

L'invention concerne une céramique opaque à base d'alumine, similaire à du rubis et ayant une ténacité élevée. Une telle céramique peut trouver des applications, notamment, dans la bijouterie, la joaillerie ou l'horlogerie.

### Arrière-plan de l'invention

Le rubis est la variété rouge de la famille du corindon qui est constitué d'alumine ayant une structure cristalline particulière. La coloration rouge du rubis est due à la présence de chrome dans le corindon.

Il existe dans le commerce des rubis polycristallins qui sont obtenus en mélangeant de l'alumine et l'oxyde de chrome et un peu de MgO comme additif de frittage, en mettant ensuite en forme le mélange et en le frittant sous atmosphère d'hydrogène ou sous vide d'au moins 10⁻¹ Torr. Les rubis polycristallins obtenus par ces voies présentent toutefois des caractéristiques mécaniques insatisfaisantes du fait d'une faible homogénéité des microstructures et de taille de grains beaucoup trop élevée puisqu'excédant souvent les 10 microns. De plus, leur aspect translucide n'est pas désirable dans certains cas de figure où il serait préférable de pouvoir employer une céramique de haute ténacité colorée dans la masse et opaque.

La demande de brevet japonais n° JP 56-140070 a trait à un procédé de fabrication de céramiques rougeâtres-pourpres à base d'alumine. Ces céramiques sont translucides, elles contiennent, d'après l'unique exemple de cette demande, de l'oxyde de chrome, de l'oxyde d'yttrium, de l'oxyde de lanthane et 0,7% d'oxyde de magnésium et leur préparation comporte une étape de frittage sous atmosphère réductrice, d'hydrogène notamment.

La demande de brevet japonais n° JP 56-140071 se rapporte également à un procédé de fabrication de céramiques rougeâtres-pourpres à base d'alumine. Ces céramiques sont également translucides, elles contiennent de l'oxyde de chrome, de l'oxyde de magnésium, de l'oxyde de lanthane et de l'oxyde d'yttrium. Leur préparation comporte un frittage sous atmosphère d'hydrogène. Cette demande ne comporte aucun exemple de réalisation.

La demande de brevet japonais n° JP 04-193760 concerne des matériaux à base d'alumine colorés. Ces matériaux sont translucides. Contrairement à ce qu'indique de façon erronée le résumé de cette demande de brevet, ces matériaux peuvent contenir jusqu'à 2%, et non 5%, d'oxyde de chrome, de cobalt, de nickel, de vanadium, de manganèse, de fer ou de titane, ainsi qu'au moins un oxyde de terre rare choisi parmi les oxydes de praséodyme, néodyme et erbium. De l'oxyde de magnésium peut également être ajouté comme agent inhibant la croissance des particules durant le frittage. Toutefois, la quantité à ajouter de cet oxyde n'est pas indiquée. La préparation de ces matériaux comprend une étape de frittage qui peut avoir lieu à l'air, à une température comprise entre 1300 et 1800 degrés. Cette étape de frittage à température élevée doit obligatoirement être suivie d'une compression isostatique à chaud (en anglais « Hot isostatic pressing » ou « Heat isostatic pressing » abrégé par « HIP ») sous une pression comprise entre 500 et 2000 atmosphères et à une température de 1400°C. Les exemples de cette demande de brevet décrivent la préparation de matériaux vert clair, rose clair, bleu clair, vert très clair et bleu très clair.

Ainsi, aucun des documents de l'état de la technique ne concerne la fabrication d'une céramique à base d'alumine qui soit opaque et présente des propriétés mécaniques satisfaisantes.

### Exposé sommaire de l'invention

Le but majeur de l'invention est de proposer une céramique opaque à base d'alumine, similaire à du rubis et ayant des propriétés mécaniques, en particulier une ténacité, suffisamment bonnes pour lui permettre d'être utilisée dans l'horlogerie, par exemple pour réaliser des pièces constituant l'habillement d'une montre, telles qu'une lunette, un boîtier ou un bracelet, qui sont exposés aux éléments et aux chocs.

Il a été constaté qu'une telle céramique, pour être satisfaisante, doit posséder une taille de grains inférieure à 5 µm, de préférence comprise entre 2,5 et 4,5 µm, plus préférentiellement entre 3 et 4 µm et idéalement entre 3,2 et 3,6 µm.

Ces buts sont atteints au moyen d'une céramique à base d'alumine ayant la composition suivante, en pourcentages massiques :
- de 0,4% à 5% d'au moins un oxyde d'un métal choisi parmi le chrome, le cobalt, le nickel, le manganèse, le vanadium, et le fer;
- de 0,00080 à 0,5% d'oxyde de magnésium ; et
- de 0,05 à 6% d'au moins un oxyde d'un élément du groupe des terres rares.

Cette céramique, que l'on peut appeler « rubis polycristallin opaque » présente ainsi à la fois une bonne homogénéité, une haute densité, un taux de porosité acceptable, une ténacité élevée, une opacité satisfaisante et une bonne aptitude au polissage.

En outre, son frittage s'effectue facilement.

La céramique selon l'invention peut être mise en oeuvre dans de nombreux domaines, parmi lesquels on peut citer la bijouterie, la joaillerie et l'horlogerie.

L'invention a également pour objectif de proposer un procédé simple de préparation d'une telle céramique. En particulier, on cherche à éviter des étapes lourdes telles qu'une compression isostatique à chaud et/ou le recours à une atmosphère réductrice.

Ainsi, l'invention a trait également à un procédé de préparation de cette céramique qui a ceci de particulier qu'il comprend une étape au cours de laquelle on ajoute au moins un oxyde d'élément du groupe des terres rares à un mélange d'alumine, d'oxyde de magnésium et d'au moins un oxyde d'au moins un métal choisi parmi le chrome, le cobalt, le nickel, le manganèse, le vanadium, le titane et le fer.

Par ailleurs, selon une variante, la céramique selon l'invention peut être préparée suivant un procédé dans lequel :
a) on prépare un mélange (ou suspension ou barbotine) comprenant, en pourcentages massiques :
   - de 0,4% à 5% d'au moins un oxyde d'un métal choisi parmi le chrome, le cobalt, le nickel, le manganèse, le vanadium, et le fer,
   - de 0,00080 à 0,5% d'oxyde de magnésium,
   - de 0,05 à 6% d'au moins un oxyde d'un élément du groupe des terres rares et
   - le complément à 100% d'alumine,
   auquel on ajoute des additifs organiques permettant la mise en forme et au moins un liquide,
b) on broie le mélange obtenu à l'étape a) ;
c) on atomise le mélange obtenu à l'étape b) ;
d) on met ensuite en forme le mélange broyé obtenu à l'étape c),
e) on soumet le produit obtenu à l'étape d) à un ou plusieurs traitement(s) thermique(s),
et dans lequel le traitement thermique ou, le cas échéant, le dernier traitement thermique, est réalisé sous une pression inférieure à 10 bars, dans une atmosphère d'un gaz contenant de l'oxygène et de préférence sous pression atmosphérique.

Selon une autre variante, la céramique selon l'invention peut être préparée suivant un procédé dans lequel :
a) on prépare un mélange (ou suspension ou barbotine) comprenant, en pourcentages massiques :
   - de 0,4% à 5% d'au moins un oxyde d'un métal choisi parmi le chrome, le cobalt, le nickel, le manganèse, le vanadium, et le fer,
   - de 0,00080 à 0,5% d'oxyde de magnésium,
   - de 0,05 à 6% d'au moins un oxyde d'un élément du groupe des terres rares et
   - le complément à 100% d'alumine,
   auquel on ajoute des additifs organiques permettant la mise en forme et au moins un liquide,
b) on broie le mélange obtenu à l'étape a) ;
c) on atomise le mélange obtenu à l'étape b) ;
d) on met ensuite en forme le mélange broyé obtenu à l'étape c) et
e) on soumet le produit obtenu à l'étape d) à au moins un traitement thermique sous une pression inférieure à 10 bars d'un gaz contenant de l'oxygène, de préférence sous pression atmosphérique,
et dans lequel on laisse refroidir le produit obtenu à l'étape e) pour obtenir la céramique opaque à base d'alumine.

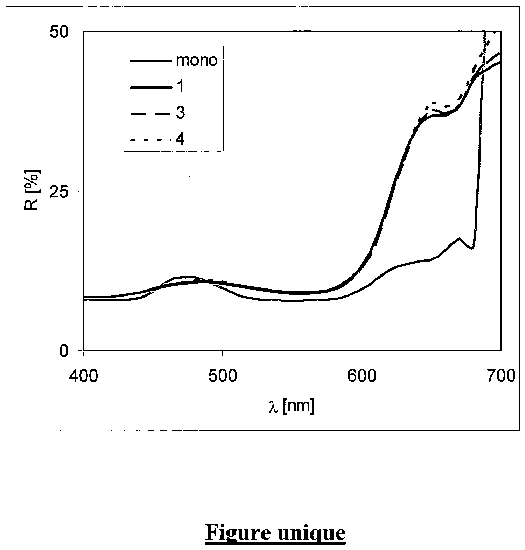

D'autres caractéristiques et avantages de l'invention vont maintenant être décrits en détail dans l'exposé qui suit et qui est complété par la figure unique annexée qui représente la variation de la réflectance R en [%] en fonction de la longueur d'onde λ en [nm] pour une céramique selon l'invention, un rubis polycristallin du commerce et d'autres céramiques testées à titre comparatif.

### Exposé détaillé de l'invention

Selon l'invention, pour présenter les propriétés mentionnées précédemment, la céramique opaque doit comprendre les constituants susvisés dans leurs plages de pourcentages respectives.

Selon un mode de réalisation préféré de l'invention, la céramique à base d'alumine comprend, en pourcentages massiques :
- plus de 2% d'au moins un oxyde d'un métal choisi parmi le chrome, le cobalt, le nickel, le manganèse, le vanadium, et le fer ;
- de 0,00083 à 0,5% d'oxyde de magnésium ; et
- de 0,1 à 5% d'au moins un oxyde d'un élément du groupe des terres rares.

Plus préférentiellement, la céramique selon l'invention comprend entre 0,5 et 2,5% en poids d'au moins un oxyde d'un élément du groupe des terres rares.

Comme oxyde de terre rare, on peut utiliser n'importe quel oxyde de terre rare. La céramique selon l'invention peut également comprendre plusieurs oxydes de terre rare.

De préférence on utilise de l'oxyde de lanthane ou l'oxyde d'erbium, en particulier ce dernier.

Bien entendu, il est possible de prévoir un dopage de l'ordre de 0,012 à 0,26 % en poids par d'autres éléments par exemple, de l'oxyde d'yttrium.

Si l'on utilise d'autres métaux, comme le fer, le cobalt, le manganèse ou le vanadium à la place ou en plus du chrome, on peut obtenir une couleur autre que le rouge. Avec le cobalt ou le fer, par exemple, il est ainsi possible d'obtenir une coloration bleue ou verte suivant le degré d'oxydation. Le degré d'oxydation est déterminé par les conditions de traitement thermique, en particulier l'atmosphère présente dans le four.

La céramique selon l'invention est de préférence exempte de silicium car sa présence induit une perte de ténacité. De plus, la silice et la magnésie forment en présence d'alumine un alumino-silicate magnésié de couleur blanc opaque qui provoque des taches dans la céramique.

### Procédé de préparation

La préparation de la céramique selon l'invention peut s'effectuer suivant des méthodes connues auxquelles on ajoute une étape d'introduction de l'oxyde ou des oxydes de terre rare.

Cette étape consiste à chauffer l'oxyde de terre rare en présence d'acide nitrique concentré jusqu'à dissolution complète de cet oxyde. Après refroidissement, la solution obtenue peut ensuite être ajoutée aux autres constituants.

Ainsi, pour préparer la céramique selon l'invention, on peut envisager les étapes suivantes :
- mélange des quantités adéquates d'alumine, d'oxyde de magnésium et d'au moins un oxyde d'au moins un métal choisi parmi le chrome, le cobalt, le nickel, le manganèse, le vanadium, et le fer, avec au moins un liquide de façon à former une barbotine ou suspension ;
- broyage du mélange obtenu ;
- préparation d'une solution contenant des ions de terre (s) rare(s) ;
- ajout de la solution d'ions de terre(s) rare(s) obtenue au mélange broyé ;
- attrition puis agitation de l'ensemble et atomisation ;
- mise en forme (par exemple de pastilles) ;
- traitement thermique à haute température pour réaliser le frittage.

La solution d'ions de terre(s) rare(s) est obtenue généralement par dissolution d'oxyde de terre rare, de préférence par dissolution d'oxyde de terre rare qui formeront des oxydes de terre rare lors du frittage.

Le liquide aide au broyage et/ou à l'atomisation. Il s'agit généralement d'eau mais on peut employer tout autre liquide approprié.

On ajoute généralement au mélange des additifs nécessaires à la mise en forme de la céramique, selon le procédé de mise en forme choisi et en suivant les enseignements de l'homme du métier, ces additifs comprenant généralement au moins un liant organique et au moins un plastifiant organique.

Par exemple, si le procédé de mise en forme choisi est le pressage, le pourcentage d'additifs organiques ajoutés nécessaires à l'obtention de granules d'atomisation aptes au pressage est généralement compris entre 1,5 et 6 % du poids de la poudre, typiquement à raison de 1 à 3 % d'un liant comme l'alcool polyvinylique(PVA), de 0,5 à 1 % d'un plastifiant comme le polyéthylèneglycol (PEG), éventuellement de 0,5 à 1 % d'un dispersant pour stabiliser la suspension comme l'acide polyacrylique et éventuellement 0,05 % d'un lubrifiant comme l'acide oléique. Cet ajout se fait en général avant attrition.

Pour préparer une solution d'ions d'élément(s) du groupe des terres rares, on utilise de l'acide nitrique. Après l'ajout de cette solution à la barbotine, la stabilisation colloïdale de la suspension est induite par le pH, sans qu'il soit nécessaire de rajouter un dispersant ou un lubrifiant.

La température du traitement thermique (frittage) est comprise entre 1640 et 1690°C, de préférence entre 1645 à 1680°C, plus préférentiellement encore, entre 1650 et 1675°C.

En ce qui concerne la ténacité obtenue, elle semble liée à la taille des grains de céramique obtenus.

### Autres variantes de procédé

Lors de la préparation du mélange destiné à être mis en forme, il va de soi que l'on peut modifier l'ordre d'ajout des divers constituants du mélange.

Il est également possible d'utiliser d'autres matériaux de départ, à condition que ceux-ci forment des oxydes lors du frittage. Par exemple, on peut utiliser comme source de Cr, Co, Ni, Mn, V, ou Fe des sels, par exemple, des nitrates, des acétates ou des oxalates.

De même, on peut aussi utiliser comme source de magnésium, des sels de magnésium, tels que le chlorure de magnésium.

Comme source de métal du groupe des terres rares, on peut aussi utiliser un sel tel qu'un nitrate, un oxalate ou un acétate. Toutefois, l'oxyde est le moyen préféré d'introduire la terre rare car c'est le produit de départ le plus pur en comparaison aux sels ou d'autres composés.

Ainsi, dans l'étape a) des procédés précités, le mélange peut être préparé à partir :
- d'au moins un composé apte à se transformer par chauffage en une quantité de 0,4% à 5% d'au moins un oxyde d'un métal choisi parmi le chrome, le cobalt, le nickel, le manganèse, le vanadium, et le fer,
- d'au moins un composé apte à se transformer par chauffage en une quantité de 0,00080 à 0,5% d'oxyde de magnésium,
- d'au moins un composé apte à se transformer par chauffage en une quantité de 0,05 à 6% d'au moins un oxyde d'un élément du groupe des terres rares et
- du complément à 100% d'alumine,
- ainsi que des additifs organiques permettant la mise en forme et d'au moins un liquide.

Par ailleurs, il est envisageable de réaliser le broyage à sec au lieu de faire une attrition en phase liquide comme décrit ci-dessus. La taille des particules obtenues après broyage sera cependant plus élevée qu'après broyage en phase liquide. Si le mélange broyé à sec est destiné à être atomisé dans la suite du procédé, on ajoutera au moins un liquide avant atomisation afin de former une suspension.

Il est possible d'utiliser une autre méthode que l'atomisation pour obtenir une poudre apte à être mise en forme à partir du mélange, l'atomisation étant particulièrement adaptée pour obtenir une poudre apte à être mise en forme par pressage.

Si un autre procédé de mise en forme que le pressage est choisi, comme l'injection haute pression, d'autres additifs seront ajoutés au mélange, car chaque procédé de mise en forme induit une composition et une formulation d'additifs organiques différente. L'homme du métier saura ajuster le mélange selon le procédé de mise en forme choisi, selon les connaissances disponibles dans la littérature et son expérience. Par exemple, dans le cas du moulage par injection, on peut délianter la poudre atomisée par traitement thermique à une température de quelques centaines de °C afin d'éliminer les liants et plastifiants, puis ajouter par malaxage des additifs organiques pour obtenir un mélange apte à être injecté, qui est aussi appelé feedstock d'injection. Les pourcentages d'additifs organiques ajoutés à la poudre atomisée peuvent aller jusqu'à 16% pour les liants, 3% pour les plastifiants et 1% pour les dispersants, ces pourcentages étant calculés par rapport à la masse de poudre atomisée.

### Exemples

### Exemple 1 : préparation d'une céramique selon l'invention

On réalise une barbotine en mélangeant dans un bol d'attrition :
98,0 g d'alumine BAIKOWSKI BMA15,
2,9248 g d'oxyde de chrome Cr₂O₃ Sigma-Aldrich,
0,1009 g de MgO Fluka,
un mélange de 3,0277 g contenant 1,2111 g (40%) de PVA Fluka et 1,8166 g (60%) de PEG 20'000 en solution à 50 % dans l'eau d = 1,09 g/cm³ Fluka,
200 ml d'eau distillée et
un mélange d'1 kg de billes de zircone contenant 20 % de billes de diamètre 5 mm, 40 % de diamètre 3 mm et 40 % de diamètre 2 mm, ces billes devant servir uniquement au broyage.

En parallèle, 0,5609 g d'oxyde d'Erbium Aldrich est versé dans un bécher en téflon de 250 ml auquel est ajouté 1,5 ml d'acide nitrique concentré à 65 % MERCK. Le bécher est placé ensuite sur une plaque chauffante avec bain de sable réglée à 150°C jusqu'à dissolution complète de l'oxyde. Cette solution est ensuite versée dans le bol d'attrition contenant le mélange ci-dessus. L'eau distillée de rinçage du bécher est également ajoutée dans le bol d'attrition. Le contenu du bol est soumis à une attrition à 400 tr/min pendant 30 min.

On récupère la barbotine obtenue dans un second récipient auquel on ajoute 450 ml d'alcool isopropylique du rinçage des billes et du récipient en zircone.

On atomise le contenu du second récipient tout en l'agitant magnétiquement à 500 tr/min afin d'éviter la floculation.

On presse les granules obtenues avec une presse manuelle à manomètre.

On réalise ensuite des pastilles dans un moule de 40 mm de diamètre. Les liants et plastifiants contenus dans les pastilles sont éliminés thermiquement puis les pastilles sont frittées dans un four Nabertherm HT4 sous air à 1650°C.

Les pastilles sont ensuite polies au laboratoire après avoir été rectifiées sur un tour Schaublin 102N équipé d'une meule diamant D91.

La taille moyenne des grains est mesurée selon la méthode normalisée ISO643 à partir de micrographies prises au microscope électronique à balayage, à un grandissement de 4000x ou 8000x selon la taille de grains. Pour révéler la microstructure, un traitement thermique supplémentaire est effectué à une température de 100°C inférieure à la température de frittage pendant 1 heure. L'échantillon est ensuite nettoyé à l'alcool, et éventuellement recouvert d'une fine couche conductrice d'or pour faciliter l'observation.

Chaque pastille obtenue est donc constituée de, en pourcentages massiques rapportés au poids total de la pastille, environ :
- 96,5% d'alumine Al₂O₃,
- 2,9% d'oxyde de chrome Cr₂O₃,
- 0,1% d'oxyde de magnésium MgO et
- 0,5% d'oxyde d'erbium Er₂O₃.

### Exemple 2 : préparation d'une autre céramique selon l'invention

On procède comme dans l'exemple 1 sauf qu'au lieu d'utiliser de l'oxyde d'erbium, on utilise 0,561 g d'oxyde de lanthane.

Les pastilles obtenues sont donc constituées de, en pourcentages massiques rapportés au poids total de la pastille, environ :
- 96,5% d'alumine Al₂O₃,
- 2,9% d'oxyde de chrome Cr₂O₃,
- 0,1% d'oxyde de magnésium MgO et
- 0,5% d'oxyde de lanthane La₂O₃.

### Exemple 3 : préparation d'une céramique hors du cadre de l'invention (basée sur l'art antérieur JP09208295)

On procède comme dans l'exemple 1 sauf qu'on n'ajoute pas de terre rare. La concentration de Cr est plus importante que celle préconisée dans le document JP09208295 (0,005-0,1%) afin d'obtenir une céramique opaque avec une coloration satisfaisante, et non une céramique translucide.

### Exemple 4 préparation d'une céramique hors du cadre de l'invention (basée sur l'art antérieur JP09208295)

On procède comme dans l'exemple 1 sauf qu'on n'ajoute pas de terre rare et qu'on ajoute 0,1 g de silice (0,1%).

### Exemple 5

On a déterminé la couleur et la ténacité des céramiques préparées comme indiqué aux exemples 1 à 4.

La couleur a été mesurée selon la norme ISO 7724 établie par la Commission Internationale de l'Eclairage suivant le système CIELab, CIE étant le sigle de la Commission Internationale de l'Eclairage et Lab les trois axes de coordonnées, l'axe L mesurant la composante blanc-noir (noir = 0 et blanc = 100), l'axe a mesurant la composante rouge-vert (rouge = valeurs positives, vert = valeurs négatives) et l'axe b mesurant la composante jaune-bleu (jaune = valeurs positives, bleu = valeurs négatives).

La ténacité a été calculée à l'aide de la formule de Anstis-Chantikul à partir de mesures réalisées par indentation Vickers à l'aide d'une charge de 1000 gf (9.80665 N) sur un microduromètre Leica VMHT MOT.

Les résultats figurent dans le tableau suivant, dans lequel C* représente la saturation et h la tonalité chromatique.

| Céramique : | L* | a* | B* | C* | H | Ténacité | Densité |
|---|---|---|---|---|---|---|---|
| 1 (exemple 1) | 41,0 | 17,7 | 6, 3 | 18,8 | 19,5 | 4,8 MPa.m^{1/2} | 3,98 g/cm³ |
| 2 (exemple 2) | 46,4 | 18,9 | 3,9 | 19,3 | 11,8 | 3,7 MPa.m^{1/2} | 3,94 g/cm³ |
| 3 (exemple 3, comparatif) | 40,7 | 17,5 | 6,0 | 18,5 | 18,8 | 2,7 MPa.m^{1/2} | 3,96 g/cm³ |
| 4, (exemple 4, comparatif) | 41,0 | 17,7 | 6,1 | 18,8 | 19,0 | 2,3 MPa.m^{1/2} | 3,96 g/cm³ |

Comme on peut le voir, les céramiques 1 et 2 selon l'invention (exemples 1 et 2) présentent les meilleures ténacités tout en ayant des paramètres L*, a*, b*, C* et h très proches de ceux des céramiques 3 et 4 hors invention (exemples 3 et 4). De plus, les céramiques selon les exemples 1 et 2 sont opaques et non translucides comme les rubis poly-cristallins selon JP09208295 ou les rubis synthétiques monocristallins disponibles dans le commerce.

La taille moyenne des grains correspondant à la céramique 1 est de 3,2 microns.

### Exemple 6

Dans cet exemple, on a comparé les courbes de réflectance des céramiques 1, 3 et 4 à celle d'un rubis synthétique monocristallin translucide (noté « mono » sur la figure annexée, fournisseur Stettler Sapphire AG, référence rubis rouge n°8).

Les résultats sont visibles sur la figure annexée. On constate que les courbes des céramiques des exemples 1, 3 et 4 sont pratiquement superposées. Ainsi, bien que l'ajout de la terre rare (erbium dans ce cas) ait un impact sensiblement positif sur la ténacité, il ne nuit pas à la coloration de la céramique.

### Exemple 7 impact du type d'atmosphère de frittage sur la couleur des pièces

On procède comme dans l'exemple 1 (composition chimique et procédé identiques) sauf que la pastille 6 est d'abord frittée sous air à 1550°C puis elle subit un traitement de pressage isostatique à chaud sous gaz Formier (N₂ + 5% de H₂) à 1400°C durant 2 heures avec 1000 bar de pression.

| Céramique (comparative) | L* | a* | B* | C* | H | Ténacité | Densité |
|---|---|---|---|---|---|---|---|
| 6 | 32,9 | 5,6 | - 0,3 | 5,6 | 357,3 | 4,4 MPa.m^{1/2} | 4,02 g/cm³ |

On constate que cette céramique 6 est de couleur très foncée (violet/pourpre). Cet exemple permet donc de mettre en évidence la variation de couleur induite le traitement en atmosphère réductrice (comparaison entre les céramiques 1 et 6) : un traitement à pression ambiante en atmosphère réductrice ou un traitement HIP sous un gaz réducteur ou neutre (qui a un effet réducteur à la température utilisée pour le traitement) ont le même effet négatif sur la couleur.

### Exemple 8 : impact du pourcentage massique d'Er₂O₃ dans la barbotine initiale sur la couleur et la ténacité.

Dans les exemples suivants, on procède comme dans l'exemple 1 sauf que la quantité d'Er₂O₃ dissoute dans l'acide nitrique varie (1,12 g dans l'exemple 7 ; 2,24 g dans l'exemple 8 ; 5,61 g dans l'exemple 9 ; 11,22 g dans l'exemple 10).

Les teneurs en oxyde d'erbium des pastilles obtenues sont donc les suivantes :
- pastille 7 : 1,1%
- pastille 8 : 2,17%
- pastille 9 : 5,26%
- pastille 10 : 10,0%

| Céramique : | L* | a* | b* | C* | H | Ténacité | Densité |
|---|---|---|---|---|---|---|---|
| 7 | 39,3 | 15,8 | 5,2 | 16,7 | 18,3 | 4,6 MPa.m^{1/2} | 4,00 g/cm³ |
| 8 | 41,2 | 17,2 | 6,0 | 18,2 | 19,2 | 4,2 MPa.m^{1/2} | 4,00 g/cm³ |
| 9 | 41,8 | 17,2 | 6,3 | 18,3 | 20,1 | 2,8 MPa.m^{1/2} | 4, 07 g/cm³ |
| 10 | 46,5 | 18,2 | 7,1 | 19,5 | 21,5 | 3,0 MPa.m^{1/2} | 4,13 g/cm³ |

Le pourcentage massique d'oxyde d'Er a un impact sur la ténacité : on constate que celle-ci diminue pour des concentrations supérieures à 5%. Il est donc préférable de choisir une concentration d'oxyde d'erbium entre 0,1% et 5%, préférablement entre 0,5 et 2,5%.

### Exemple 9 : impact de la température maximale de cuisson (taille des grains) sur la ténacité

On procède comme dans l'exemple 1 de la demande de brevet mais on fait varier la taille des grains en jouant avec les conditions de frittage sous air.

Dans cet exemple, la température de frittage est mesurée à 1645°C (céramique 11), contre 1660°C (céramique 12), 1675°C (céramique 13) et enfin 1690°C (céramique 14).

| Céramique : | L* | a* | b* | C* | h | Ténacité | Densité |
|---|---|---|---|---|---|---|---|
| 11 | 41,2 | 18,0 | 6,3 | 19,1 | 19,4 | 3,7 MPa.m^{1/2} | 3, 97 g/cm³ |
| 12 | 40,5 | 17,6 | 6,2 | 18, 6 | 19,6 | 4,8 MPa.m^{1/2} | 3,98 g/cm³ |
| 13 | 40,1 | 16,8 | 5,7 | 17,7 | 18,8 | 4,4 MPa.m^{1/2} | 3,99 g/cm³ |
| 14 | 39,0 | 15,8 | 5,2 | 16,6 | 18,2 | 3,5 MPa.m^{1/2} | 3, 99 g/cm³ |

La taille moyenne des grains varie sensiblement en fonction du traitement thermique appliqué : elle est de 3 microns (céramique 11), 3,2 microns (céramique 12), 3,6 microns (céramique 13) et 4,5 microns (céramique 14) et augmente donc avec la température de frittage.

La taille de grains a donc un impact prépondérant sur la ténacité : on aura une ténacité trop faible pour une taille de grains > 5µm (et donc une température de frittage nettement supérieure à 1700°C), avec un optimum pour une taille de grains entre 2,5 et 4,5 µm, soit une température de traitement entre 1640°C et 1690°C.

## Revendications

1. Céramique opaque à base d'alumine comprenant, en poids :
- de 0,4% à 5% d'au moins un oxyde d'un métal choisi parmi le chrome, le cobalt, le nickel, le manganèse, le vanadium et le fer ;
- de 0,00080 à 0,5% d'oxyde de magnésium ; et
- de 0,05 à 6% d'au moins un oxyde d'un élément du groupe des terres rares.

2. Céramique opaque à base d'alumine selon la revendication 1, comprenant, en poids :
- plus de 2% d'au moins un oxyde d'un métal choisi parmi le chrome, le cobalt, le nickel, le manganèse, le vanadium et le fer ;
- de 0,00083 à 0,5% d'oxyde de magnésium ; et
- de 0,1 à 5% d'au moins un oxyde d'un élément du groupe des terres rares.

3. Céramique opaque à base d'alumine selon l'une des revendications précédentes, comprenant entre 0,5 et 2,5% en poids d'au moins un oxyde d'un élément des terres rares.

4. Céramique opaque à base d'alumine selon l'une des revendications précédentes, comprenant deux oxydes d'élément des terres rares dont l'un est l'oxyde d'yttrium et est présent à raison de 0,012 à 0,26% en poids.

5. Céramique opaque à base d'alumine selon l'une des revendications précédentes, dans laquelle l'oxyde d'élément du groupe des terres rares est un oxyde d'erbium ou un oxyde de lanthane.

6. Céramique opaque à base d'alumine selon l'une des revendications précédentes, **caractérisée en ce qu'**elle est exempte de silicium.

7. Procédé de préparation d'une céramique selon l'une des revendications précédentes, comprenant:
- une étape au cours de laquelle on ajoute au moins un oxyde d'élément du groupe des terres rares à un mélange d'alumine, d'oxyde de magnésium et d'au moins un oxyde d'au moins un métal choisi parmi le chrome, le cobalt, le nickel, le manganèse, le vanadium et le fer, sachant que l'on chauffe l'oxyde d'élément du groupe des terres rares en présence d'acide nitrique concentré jusqu'à dissolution complète de l'oxyde et on laisse refroidir la solution avant de l'ajouter audit mélange.
- une étape de frittage entre 1640 et 1690°C, voire comprise entre 1645 et 1680°C, voire comprise entre 1650 et 1675°C, ledit frittage étant réalisé sous une pression inférieure à 10 bars d'un gaz contenant de l'oxygène.

## Patentansprüche

1. Opakkeramik auf der Basis von Aluminiumoxid umfassend, in Gewichtsanteilen:
- 0,4% bis 5% mindestens eines Metalloxids gewählt aus Chrom, Kobalt, Nickel, Mangan, Vanadium und Eisen;
- 0,00080 bis 0,5 % Magnesiumoxid; und
- 0,05 bis 6% mindestens eines Oxids eines Elements aus der Gruppe der seltenen Erden.

2. Opakkeramik auf Basis von Aluminiumoxid gemäß Anspruch 1, umfassend, in Gewichtsanteilen:
- mehr als 2% mindestens eines Metalloxids gewählt aus Chrom, Kobalt, Nickel, Mangan, Vanadium und Eisen;
- 0,00083 bis 0,5% Magnesiumoxid; und
- 0,1 bis 5% mindestens eines Oxids eines Elements aus der Gruppe der seltenen Erden.

3. Opakkeramik auf Basis von Aluminiumoxid gemäß einem der vorangehenden Ansprüche, umfassend, in Gewichtsanteilen, zwischen 0,5 und 2,5% mindestens eines Oxids eines Elements seltener Erden.

4. Opakkeramik auf Basis von Aluminiumoxid gemäß einem der vorangehenden Ansprüche, umfassend zwei Oxide von Elementen seltener Erden, von denen eines Yttriumoxid ist und welches mit einem Gewichtsanteil von 0,012 bis 0,26% enthalten ist.

5. Opakkeramik auf Basis von Aluminiumoxid gemäß einem der vorangehenden Ansprüche, bei welcher das Oxid des Elements aus der Gruppe der seltenen Erden ein Erbiumoxid oder ein Lanthanoxid ist.

6. Opakkeramik auf Basis von Aluminiumoxid gemäß einem der vorangehenden Ansprüche, **dadurch gekennzeichnet, dass** sie frei von Silicium ist.

7. Verfahren zur Herstellung einer Keramik gemäß einem der vorangehenden Ansprüche, umfassend:
- einen Schritt, während dessen mindestens ein Oxid eines Elements aus der Gruppe seltener Erden zu einer Mischung von Aluminiumoxid, Magnesiumoxid und mindestens eines Oxids von mindestens einem Metall gewählt aus Chrom, Kobalt, Nickel, Mangan, Vanadium und Eisen hinzugegeben wird, unter Berücksichtigung der Tatsache, dass man ein Oxid eines Elements aus der Gruppe der seltenen Erden in Gegenwart von konzentrierter Salpetersäure bis zur vollständigen Auflösung des Oxids erhitzt, und man die Lösung abkühlen lässt, bevor sie zu der genannten Mischung hinzugefügt wird;
- einen Sinter-Schritt zwischen 1640 und 1690°C, insbesondere zwischen 1645 und 1680°C, insbesondere zwischen 1650 und 1675°C, wobei der genannte Sinter-Schritt unter einem Druck von weniger als 10 bar eines Gases enthaltend Sauerstoff durchgeführt wird.

## Claims

1. An alumina-based opaque ceramic comprising, by weight:
- from 0.4% to 5% of at least one oxide of a metal chosen from chromium, cobalt, nickel, manganese, vanadium and iron;
- from 0.00080% to 0.5% of magnesium oxide; and
- from 0.05% to 6% of at least one oxide of an element from the group of rare earths.

2. The alumina-based opaque ceramic as claimed in claim 1, comprising, by weight:
- more than 2% of at least one oxide of a metal chosen from chromium, cobalt, nickel, manganese, vanadium and iron;
- from 0.00083% to 0.5% of magnesium oxide; and
- from 0.1% to 5% of at least one oxide of an element from the group of rare earths.

3. The alumina-based opaque ceramic as claimed in one of the preceding claims, comprising between 0.5% and 2.5% by weight of at least one oxide of an element from the rare earths.

4. The alumina-based opaque ceramic as claimed in one of the preceding claims, comprising two oxides of elements from the rare earths, one of which is yttrium oxide and is present in a proportion of from 0.012% to 0.26% by weight.

5. The alumina-based opaque ceramic as claimed in one of the preceding claims, wherein the oxide of the element from the group of the rare earths is an erbium oxide or a lanthanum oxide.

6. The alumina-based opaque ceramic as claimed in one of the preceding claims, **characterized in that** it is free of silicon.

7. A process for preparing a ceramic as claimed in one of the preceding claims, comprising:
- a step during which at least one oxide of an element from the group of rare earths is added to a mixture of alumina, magnesium oxide and at least one oxide of at least one metal chosen from chromium, cobalt, nickel, manganese, vanadium and iron, wherein the oxide of the element from the group of rare earths is heated in the presence of concentrated nitric acid until the oxide is completely dissolved and the solution is left to cool before adding it to said mixture,
- a step of sintering between 1640 and 1690°C, or between 1645 and 1680°C or between 1650 and 1675°C, said sintering being carried out under a pressure of less than 10 bar of an oxygen-containing gas.
